# EUROPÄISCHE PATENTSCHRIFT

(11) **EP 0 344 579 B1**
(45) Veröffentlichungstag und Bekanntmachung des Hinweises auf die Patenterteilung: **29.09.1993**
(21) Anmeldenummer: 89109253.8
(22) Anmeldetag: 23.05.1989
(51) Int. Cl.: H04N 9/64

(54) **Anordung zur Reduzierung von Rauschen und Farbübersprechen bei Fernsehsignalen**
Device for reducing noise and cross-colour in television signals
Dispositif de réduction du bruit et de la diaphonie couleur dans les signaux de télévision

(30) Priorität: 31.05.1988 DE 3818539
(43) Veröffentlichungstag der Anmeldung: 06.12.1989
(73) Patentinhaber: SIEMENS AKTIENGESELLSCHAFT, 80333 München (DE)
(72) Erfinder: Scheffler, Günter, D-8000 München 45 (DE)

(56) Entgegenhaltungen:
- DE-A- 3 633 716
- US-A- 4 658 285

## Beschreibung

Die Erfindung betrifft eine Schaltungsanordnung zur gleichzeitigen Reduzierung von Rauschen und Farbübersprechen bei aus einem Luminanzsignal und zwei Chrominanzsignalen bestehenden Fernsehsignalen gemäß dem Oberbegriff des Patentanspruchs 1.

Die noch heute gebräuchlichen Normen z. B. PAL NTSC, für die Übertragung kodierter Fernsehsignale enthalten nach der Demulation in die Luminanz-und Chrominanz-Signale im Empfänger Störanteile durch gegenseitiges Übersprechen. Hinzu kommen Störungen durch unvermeidliches Rauschen. Als Farbübersprechen bezeichnet man das Übersprechen des Luminanzsignals zum Chrominanzsignal. Es macht sich z. B. durch schillernde Farben in jenen Bildteilen bemerkbar, die viel Luminanzdetails enthalten. Als Beispiel seien schillernde Farben auf karierten Anzügen herangezogen. Rauschen andererseits beeinträchtigt die Bildsignale ebenfalls. Rauschquellen können z. B. Videorekorder oder mehrfach kopierte Videobänder sein ebenso wie bestimmte Fernsehkanäle mit Rauschen behaftet sind.

Beide Störeffekte können mit Hilfe der digitalen Signalverarbeitung erheblich reduziert werden. Es ist bekannt, Farbübersprechen für professionelle Anwendungen durch aufwendige Dekodierverfahren mit mehreren Bildspeichern zu reduzieren. Aus der Veröffentlichung E.J. Berghoff, U. E. Kraus, J. G. Raven "Applications of Picture Memories in Television Receivers", IEEE Transactions on Consumer Electronics, Vol. CE-29 Nr.3, August 1983" ist ein Schaltungsvorschlag für nichtprofessionelle Anwendungen bekannt, der wahlweise die Reduktion von Rauschen oder Farbübersprechen erlaubt. Ein Verfahren zur Reduktion von Rauschen in Fernsehsignalen ist beispielsweise aus der Veröffentlichung H. Schönfelder "Möglichkeiten der Qualitätsverbesserung beim heutigen Fernsehsystem", Fernseh- und Kinotechnik 5/83 bekannt.

Darüber hinaus ist eine Schaltungsanordnung, wie sie im Oberbegriff des Patentanspruchs 1 angegeben ist, aus dem Dokument US-A-4,658,285 bekannt. Diese bekannte Schaltungsanordnung weist jeweils dem Luminanzsignal und den Chrominanzsignalen zugeordnete rekursive Filter mit einstellbaren Filterkoeffizienten und mit einem dem Luminanzsignal zugeordneten Bewegungsdetektor, der mit den rekursiven Filtern verbunden ist, auf.

Bei solchen Schaltungsanordnungen nehmen mit zunehmender Rauschreduktion störende Nachzieheffekte zu.

Der Erfindung liegt daher die Aufgabe zugrunde, ausgehend von diesen bekannten Schaltungsanordnungen, eine verbesserte Schaltungsanordnung anzugeben, die derartige Nachzieheffekte vermeidet.

Diese Aufgabe wird durch eine Schaltungsanordnung mit den Merkmalen des Patentanspruchs 1 gelöst.

Weiterbildungen der Erfindung sind Gegenstand der Unteransprüche.

Die Erfindung besitzt den Vorteil, daß bei einer Ableitung der Änderungsinformation für das Chrominanzfilter aus dem Luminanzsignal das Farbübersprechen nicht mißinterpretiert werden kann als eine Änderung und deshalb das rekursive Filter im Chrominanz-Signalpfad nicht abgeschaltet wird. Mit der erfindungsgemäßen Schaltungsanordnung wird keine merkbare Verschlechterung der Chrominanzsignale bewirkt, sie reduziert aber das Farbübersprechen in den stationären Teilen des Bildes erheblich. Darüber hinaus wird auch eine gute Reduktion der Änderungen bzw. Bewegungen erreicht.

Ausgestaltungen der Erfindung sind Gegenstand der Unteransprüche.

Die Erfindung wird im folgenden anhand von in den Figuren dargestellten Ausführungsbeispielen näher erläutert. Es zeigt:
- FIG 1: ein Blockschaltbild zur Erläuterung der digitalen Signalverarbeitung bei Fernsehsignalen,
- FIG 2: ein Blockschaltbild des Bildprozessors,
- FIG 3: ein Blockschaltbild eines Änderungs- oder Bewegungsdetektors,
- FIG 4: ein Blockschaltbild einer erfindungsgmäßen Anordnung zur Durchführung des erfindungsgemäßen Verfahrens und
- FIG 5: ein Blockschaltbild eines Ausführungsbeispiels zur erfindungsgemäßen Ableitung von Filterkoeffizienten.

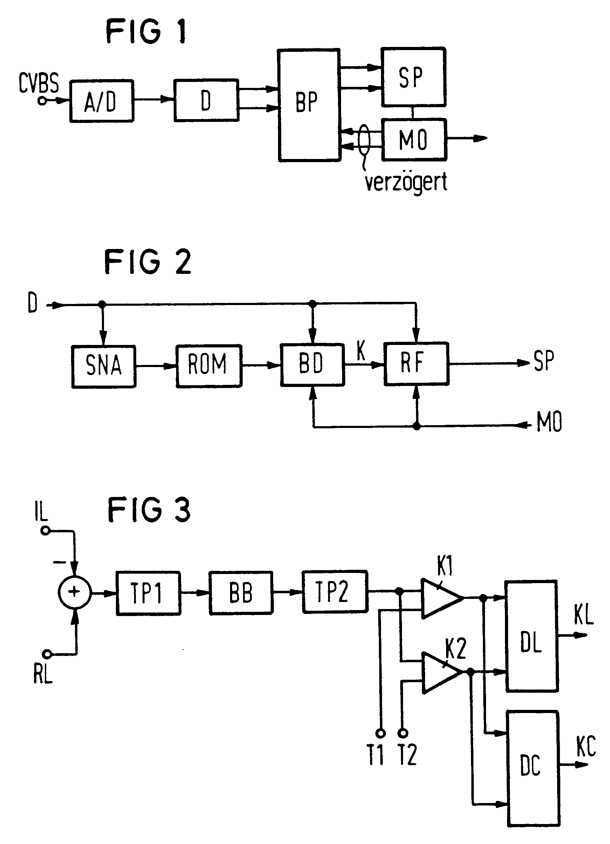

Gemäß Figur 1 ist die digitale Signalbearbeitung für Fernsehsignale prinzipiell anhand eines Blockschaltbilds dargestellt. Das kodierte übertragene Fernsehsignal CVBS wird mit Hilfe eines Analog-Digital-Wandlers A/D digital gewandelt und anschließend einem Dekoder D zugeführt. Der Dekoder dekodiert das digitale Fernsehsignal, so daß das Luminanz-und die Chrominanzsignale einem Bildprozessor BP zugeführt werden können. Die verarbeiteten Signale des Bildprozessors BP werden in einem Halb- oder Vollbildspeicher SP gespeichert und über eine Ausgangsschaltung MO einerseits zur weiteren Verarbeitung ausgegeben, andererseits zeitverzögert wieder dem Bildprozessor BP zugeführt. Gesteuert wird die Anordnung von einem nicht gezeichneten Taktgenerator, der Takt- und Synchronisiersignale erzeugt.

Figur 2 zeigt die wesentlichen Elemente des Bildprozessors BP als Blockschaltbild. Die dekodierten Luminanz-und Chrominanzsignale werden nach dem Demultiplexen einer Anordnung SNA zur Signal-zu-Rausch-Adaption einem Änderungs-bzw. Bewegungsdetektor BD und einem rekursiven Filter RF zugeführt. Die Anordnung SNA zur Signal-zu-Rausch-Adaption legt vorzugsweise mit Hilfe eines Festwertspeichers ROM die Bedingungen fest, unter denen der Bewegungsdetektor BD anspricht. Der Bewegungsdetektor seinerseits wiederum leitet die Filterkoeffizienten K für das rekursive Filter RF her. Die Ausgänge des rekursiven Filters werden dem Speicher SP zugeführt, so daß die Werte zwischengespeichert und zeitverzögert wieder dem Bewegungsdetektor BD und dem rekursiven Filter RF zugeführt werden.

Für normales Fernsehprogrammaterial besteht eine hohe Korrelation zwischen einander entsprechenden Bildpunkten aufeinanderfolgender Bilder. Unter der Annahme daß das Rauschen ein statistischer Prozess ist, ist es möglich, das Rauschen ohne Beeinflußung der Signalkomponenten durch rekursive zeitliche Filterung mit Hilfe der Zwischenspeicherung im Speicher SP zu reduzieren. Deshalb stellt das rekursive Filter RF die Hauptkomponente des Bildprozessors BP dar, das die aktuellen Eingangsdaten und die zeitverzögerten Daten verarbeitet. Die Filterkoeffizienten K legen dabei den Betrag der Rauschreduktion fest. Die auf diese Weise gewonnenen verarbeiteten Daten werden dann wiederum in den Speicher SP zur Zwischenspeicherung für den nächsten Verarbeitungsschritt eingeschrieben. Die Erfindung beruht auf dem Verfahren zur Reduktion vom Rauschen, wie es in der eingangs genannten Veröffentlichung von H. Schönfelder geschildert ist.

Die Filterfunktion des rekursiven Filters RF ist derart vorgegeben, daß der Filterkoeffizient K kleiner oder gleich 1 sein muß. K gleich 1 bedeutet, daß das Eingangssignal unverarbeitet am Ausgang erscheint und keine Rauschreduktion durchgeführt wird. Mit abnehmenden K wächst die Rauschreduktion.

Ein wichtiger Teil der Schaltung zur Rauschreduktion ist der Bewegungsdetektor BD, der den oder die Filterkoeffizienten K festlegt. Der Bewegungsdetektor BD nimmt eine Aufteilung des Bildes in geänderte und ungeänderte Zonen vor und kontrolliert die Arbeitsbedingungen des rekursiven Filters RF. Es war bisher bekannt, für jedes der drei zu filternden Signale, das Luminanzsignal IL und die beiden Chrominanzsignale IB und IR jeweils einen Bewegungsdetektor und ein rekursives Filter vorzusehen. Gemäß der vorliegenden Erfindung werden mit Hilfe des Bewegungsdetektors BD für jeden zu verarbeitenden Bildpunkt des Bildes zwei Filterkoeffizienten abgeleitet. Der Filterkoeffizient KL kontrolliert das Luminanzfilter und der Filterkoeffizient KC das Chrominanzfilter. Die entsprechenden Bildpunkte im Zeitmultiplex beider Chrominanzsignale werden mit Hilfe des gleichen Filterkoeffizienten KC gefiltert. Bisher bekannte Bewegungsdetektoren mußten, um Artefakte in den Chrominanzsignalen, d. h. Nachzieheffekte die zu einem Schärfeverlust des Bildes führen, zu vermeiden in allen veränderten Bildbereichen die Rauschreduktion abschalten, d. h. den Filterkoeffizienten gleich 1 wählen. Das hatte zur Folge, daß Farbübersprechen in Chrominanzsignalen als Bewegung gedeutet wurde, sodaß die Filterung abgeschaltet und das Farbübersprechen nicht reduziert wurde. Gemäß der Erfindung werden die Filterkoeffizienten für beide Chrominanzsignale aus dem Luminanzsignal abgeleitet, so daß beim Auftreten von Farbübersprechen keine Abschaltung der Filterung erfolgt.

Figur 3 zeigt ein Blockschaltbild eines Bewegungsdetektors BD als Ausführungsbeispiel einer erfindungsgemäßen Anordnung. Die entsprechenden Bildpunkte zweier aufeinanderfolgender Feldbereiche IL und RL werden voneinander subtrahiert und die Differenz einem Tiefpaß TP 1 zugeführt. Nach einem Betragsbildner BB wird in einem zweiten Tiefpaß TP 2 die Wortlänge begrenzt. Dessen Ausgangssignal wird in zwei Komparatoren K1 und K2 mit zwei Vergleichsspannung T1 und T2 verglichen. Die Ausgänge der Komparatoren K1 und K2 steuern einerseits einen Dekoder DL für das Luminanzsignal zur Ableitung des Filterkoeffizienten KL und andererseits einen Dekoder DC zur Ableitung des Filterkoeffizienten KC für die Chrominanzsignale.

Generell werden die Filterkoeffizienten so festgelegt, daß bei keiner oder einer sehr geringen Bewegungsänderung der kleinste Filterkoeffizient verwendet wird, um die beste Rauschreduktion zu erreichen. Für kleine Änderungen zwischen einzelnen Bildbereichen wird ein größeres Rauschen zugelassen, d. h. die Rauschreduktion wird verringert. Bei Feststellung schneller Bewegungen wird das Filter abgeschaltet, d. h. der Koeffizient K wird gleich 1 gewählt. Diese Festlegungsweise garantiert ein Maximum an Rauschreduktion und ein Minimum fast aller sichtbaren Nachzieheffekte. Die verbleibenden Nachzieheffekte und das verbleibende Rauschen ist meistens tolerierbar, da das menschliche Auge eine reduzierte Empfindlichkeit bei Bewegungsänderungen hat.

Da erfindungsgemäß die maßgebenden Filterkoeffizienten allein aus dem Luminanzsignal IL bzw. RL abgeleitet werden, die die Eingänge des Bewegungsdetektors BD bilden, kann das Farbübersprechen des Luminanz- in den Chrominanzkanal keine Bewegung oder Änderung im Chrominanzkanal vortäuschen, so daß das rekursive Filter nicht abgeschaltet wird. Da der Chrominanzkanal keinen eigenen Bewegungsdetektor besitzt und mit Hilfe des Luminanzsingals kontrolliert wird, bleibt das rekursive Filter für die Chrominanzsignale aktiv.

Das erfindungsgemaße Verfahren verursacht keine bemerkbare Verschlechterung der Chrominanzsignale, sondern reduziert das Farbübersprechen in stationären Teilen des Bildes signifikant, während in bewegten Teilen des Bildes eine gute Reduktion erreicht wird.

Zur Erzielung eines optimalen Verhaltens ist es notwendig, das Filterverhalten an das Signal-zu-Rausch-Verhältnis des Eingangssignals anzupassen. Im allgemeinen nehmen störende Nachzieheffekte mit zunehmender Rauschreduktion zu. Wenn also die Qualität des ursprünglichen Fernsehsignals gut ist, ist eine starke Rauschreduktion nicht notwendig. Es ist deshalb zweckmäßig, den Betrag der Rauschreduktion an die Rauschkomponenten des Eingangssignals anzupassen. Gemäß Figur 2 liegt die Anordnung SNA zur Signal-zu-Rausch-Anpassung, vorzugsweise mit Hilfe vorzugsweise eines Festwertspeichers die Schwellen T1 und T2 fest, bei denen die Komparatoren K1 und K2 des Bewegungsdetektors BP ansprechen. Auf diese Weise wird zusätzlich eine Optimierung der Filterkoeffizienten der Luminanz- und Chrominanz-Signale erreicht.

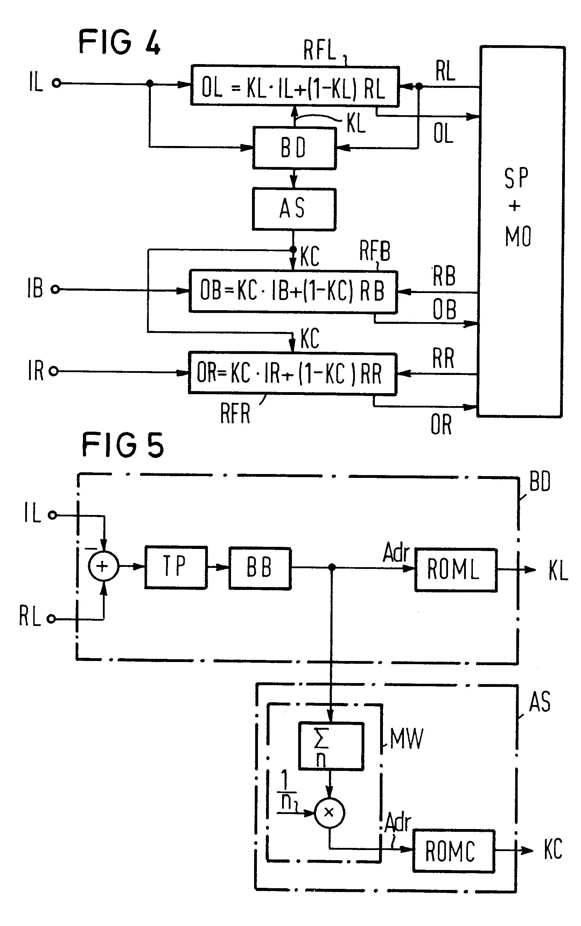

Das Ausführungsbeispiel gemäß Figur 4 zeigt anhand eines Blockschaltbildes das Prinzip des erfindungsgemäßen Verfahrens und der erfindungsgemäßen Anordnung. Das Luminanzsignal IL wird zusammen mit dem zeitverzögerten, vom Speicher SP ausgegebenen korrespondierenden Signal RL einerseits einem Rekursivfilter RFL und andererseits einem Bewegungsdetektor BD zugeführt. Der Bewegungdetektor BD legt auf die geschilderte Art und Weise den Filterkoeffizienten KL für des Rekursivfilter RFL fest. Das mit Hilfe des Filters verarbeitete Luminanzsignal wird wiederum ausgangsseitig im Speicher SP zwischengespeichert. Andererseits wird mit Hilfe des Bewegungsdetektors BD eine Auswerteschaltung AS angesteuert, mit deren Hilfe der Filterkoeffizient KC für die Chrominanzsignale festgelegt wird. Entsprechend dem Luminanzsignal IL bzw. RL werden die Chrominanzsignale IB und RB einerseits und IR und RR andererseits je einem rekursiven Filter RFB und RFR zugeführt.

Mit Hilfe des durch die Auswerteschaltung AS bestimmten Filterkoeffizienten KC werden die Chrominanzsignale rekursiv gefiltert und das Ergebnis der Filterung wiederum im Bildspeicher SP zwischengespeichert.

Die Figur 5 zeigt ein einfaches Ausführungsbeispiel für die Ausbildung eines Bewegungsdetektors BD und die Auswerteschaltung AS. Entsprechend Figur 3 werden die korrespondierenden Luminanzsignale IL und RL zunächst voneinander subtrahiert, die Differenz einem Tiefpaß zugeführt und von dessen Ausgangssignal der Absolutbetrag gebildet. Der Ausgang des Betragbildners BB adressiert einen als Festwertspeicher ROML ausgebildeten Dekoder DL zur Ableitung des Filterkoeffizienten KL. Andererseits wird der Ausgang des Betragsbildners BB in der Auswerteschaltung AS einem Akkumulator zugeführt, der vier Werte addiert und daraus den Mittelwert bildet. Dieser Mittelwert wiederum adressiert einen als Festwertspeicher ROMC ausgebildeteten Dekoder zur Ableitung des Filterkoeffizienten KC für die Chrominanzsignale.

Gemäß Figur 5 ist ein Fernsehsystem angenommen, bei dem das Luminanzsignal mit einer vierfach höheren Frequenz abgetastet wird als die Chrominanzsignale, z. B. PAL. Der Filterkoeffizient KC muß sich damit lediglich mit jedem vierten Koeffizienten KL ändern.

Erfindungsgemäß sind aber auch andere Ableitungen der Filterkoeffizienten möglich, wenn ein anders strukturierter Bewegungsdetektor vorhanden ist und/oder die Eingangswerte für die Auswerteschaltung AS an einer anderen Stelle des Bewegungsdetektors abgenommen werden. Im übrigen ist es auch möglich, die aus benachbarten Fernsehzeilen gewonnenen Informationen zu berücksichtigen. Derartige, jeweils für sich spezielle Ausführungen, liegen jedoch im durchschnittlichen Können eines Fachmanns.

## Patentansprüche

1. Schaltungsanordnung zur gleichzeitigen Reduzierung von Rauschen und Farbübersprechen bei aus einem Luminanzsignal (IL) und zwei Chrominanzsignalen (IB, IR) bestehenden Fernsehsignalen,
mit jeweils dem Luminanzsignal (IL) und den Chrominanzsignalen (IB, IR) zugeordneten rekursiven Filtern (RFL, RFB, RFR) mit einstellbaren Filterkoeffizienten (KL, KC) und mit einem dem Luminanzsignal (IL) zugeordneten Bewegungsdetektor (BD), der mit den rekursiven Filtern (RFL, RFB, RFR) verbunden ist,
**dadurch gekennzeichnet,**
daß der Bewegungsdetektor (BD) mit Vergleichseinrichtungen (K1, K2) mit veränderbaren Schwellen (T1, T2) und mit zwei, von diesen angesteuerten, die Filterkoeffizienten (KL, KC) der rekursiven Filter (RFL, RFB, RFR) für das Luminanzsignal (IL) einerseits und die Chrominanzsignale (IB, IR) andererseits festlegenden Auswerteschaltungen (DL, DC) gebildet ist und
daß die veränderbaren Schwellen (T1, T2) der Vergleichseinrichtungen (DL, DC) mit Hilfe einer Signal -zu-Rauschanordnung (SNA) aus dem Rauschen des Luminanzsignals (IL) festlegbar sind.

2. Schaltungsanordnung nach Anspruch 1,
**dadurch gekennzeichnet,** daß die Auswerteschaltung (DC, DL) nicht-flüchtige Speicher (ROML, ROMC) enthalten, die abhängig von ihrer Ansteuerung durch die Vergleichseinrichtungen (K1, K2) Filterkoeffizienten (KC, KL) für die rekursiven Filter (RFL, RFB, RFR) bereitstellen.

3. Schaltungsanordnung nach Anspruch 1 oder 2,
**dadurch gekennzeichnet,** daß in der Auswerteschaltung (DC) für die Chrominanzsignale (IB, IR) ein Mittelwertbildner (MW) vorgesehen ist, der ein Steuersignal für die Festlegung von Filterkoeffizienten (KC) für die rekursiven Filter (RFB, RFR) der Chrominanzsignale (IB, IR) nach einer Mehrzahl von Luminanzsignalabtastwerten (IL) bestimmt.

## Claims

1. Circuit arrangement for simultaneously reducing noise and cross-colour in television signals consisting of one luminance signal (IL) and two chrominance signals (IB, IR), having recursive filters (RFL, RFB, RFR), in each case allocated to the luminance signal (IL) and the chrominance signals (IB, IR), with adjustable filter coefficients (KL, KC) and with a motion detector (BD), which is allocated to the luminance signal (IL) and is connected to the recursive filters (RFL, RFB, RFR), characterised in that the motion detector (BD) is formed by means of comparison devices (K1, K2) with variable thresholds (T1, T2) and with two evaluating circuits (DL, DC) which are driven by the comparison devices and define the filter coefficients (KL, KC) of the recursive filters (RFL, RFB, RFR) for the luminance signal (IL), on the one hand, and the chrominance signals (IB, IR), on the other hand, and in that the variable thresholds (T1, T2) of the comparison devices (DL, DC) can be defined from the noise of the luminance signal (IL) with the aid of a signal/noise arrangement (SNA).

2. Circuit arrangement according to Claim 1, characterised in that the evaluating circuit (DC, DL) contains non-volatile memories (ROML, ROMC) which provide filter coefficients (KC, KL) for the recursive filters (RFL, RFB, RFR) in dependence on how they are driven by the comparison devices (K1, K2).

3. Circuit arrangement according to Claim 1 or 2, characterised in that an averaging device (MW), which determines a control signal for defining filter coefficients (KC) for the recursive filters (RFB, RFR) of the chrominance signals (IB, IR) in accordance with a plurality of luminance signal samples (IL), is provided in the evaluating circuit (DC) for the chrominance signals (IB, IR).

## Revendications

1. Montage pour réduire simultanément les bruits et les diaphonies chromatiques, pour des signaux de télévision constitués d'un signal de luminance (IL) et de deux signaux de chrominance (IB, IR),
comportant des filtres récursifs (RFL, RFB, RFR) associés respectivement au signal de luminance (IL) et aux signaux de chrominance (IB, IR) et possédant des coefficients de filtrages réglables (KL, KC), et un détecteur de déplacement (BD) qui est associé au signal de luminance (IL) et qui est relié aux filtres récursifs (RFL, RFB, RFR),
caractérisé en ce que,
le détecteur de déplacement (BD) est constitué par de circuits comparateurs (K1, K2) à valeurs seuil (T1, T2) modifiables et par deux circuits d'évaluation (DL, DC) commandés par lesdits comparateurs et fixant les coefficients de filtrage (KL, KC) des filtres récursifs (RFL, RFB, RFR) pour le signal de luminance (IL), d'une part, et pour les signaux de chrominance (ID, IR), d'autre part, et
que les valeurs seuil (T1, T2) modifiables des circuits comparateurs (DL, DC) sont susceptibles d'être fixées à l'aide d'un dispositif de signal/bruit (SNA), à partir du bruit du signal de luminance (IL).

2. Montage suivant la revendication 1,
caractérisé en ce que les circuits d'évaluation (DC, DL) comportent des mémoires non volatiles (ROML, ROMC) qui élaborent, en fonction de leur commande par les circuits comparateurs (K1, K2), des coefficients de filtrage (KC, KL) pour les filtres récursifs (RFL, RFB, RFR).

3. Montage suivant la revendication 1 ou 2,
caractérisé en ce que, dans le circuit d'évaluation (DC) pour les signaux de chrominance (IB, IR), il est prévu un formateur de moyenne (moyenneur) (MW) qui détermine un signal de commande pour déterminer des coefficients de filtrage (KC) pour les filtres récursifs (RFB, RFR) des signaux de chrominance (IB, IR), après une multiplicité de valeurs d'échantillonnage du signal de luminance (IL).
